# EUROPEAN PATENT SPECIFICATION

(11) **EP 3 032 631 B1**
(45) Date of publication and mention of the grant of the patent: **12.02.2020**
(21) Application number: 15199305.2
(22) Date of filing: 10.12.2015
(51) Int. Cl.: H01M 8/249, H01M 8/0202, H01M 8/24, B64C 39/02, B60L 50/72, H01M 8/1018, H01M 8/0206, H01M 8/0228, H01M 8/04089, B63G 8/00, B63H 21/00

(54) **UNMANNED UNDERWATER VEHICLE WITH MULTI-VOLTAGE FUEL CELL**
UNBEMANNTES UNTERWASSERFAHRZEUG MIT MEHRSPANNUNGSBRENNSTOFFZELLE
VÉHICULE SOUS-MARIN SANS ÈQUIPAGE AVEC PILE À COMBUSTIBLE MULTI-TENSION

(30) Priority: 11.12.2014 US 201414566738
(43) Date of publication of application: 15.06.2016
(60) Divisional application: 19217118.9
(73) Proprietor: Hamilton Sundstrand Space Systems International, Inc., Windsor Locks, CT 06096-1010 (US)
(72) Inventor: CONVERSE, David G., Hampden, MA 01036 (US); LEZON, Thomas J., Ellington, CT 06029 (US)
(74) Representative: Dehns

(56) References cited:
- DE-A1- 10 314 360
- JP-A- 2011 216 351
- JP-B2- 5 133 466
- US-A1- 2007 111 061
- US-A1- 2010 055 517
- Chien-Hsing Lee ET AL: "Assessment of PEM Fuel Cells-Based DC/DC Power Conversion for Applications in AUVs", IEEE TRANSACTIONS ON AEROSPACE AND ELECTRONIC SYSTEMS., vol. 46, no. 4, 30 December 2010 (2010-12-30), pages 1834-1847, XP055522046, US ISSN: 0018-9251, DOI: 10.1109/TAES.2010.5595598

## Description

### BACKGROUND

This application relates to an unmanned underwater vehicle with a fuel cell.

A fuel cell is a device that converts chemical energy of a fuel into electrical energy, typically by oxidizing the fuel. In general, a fuel cell includes an anode and a cathode which are catalyst layers on opposite sides of an electrolytic membrane. When fuel is supplied to the anode and oxidant is supplied to the cathode, the membrane assembly generates a useable electric current that is passed through an external load. In one widely used type of fuel cell, the fuel supplied is hydrogen and the oxidant supplied is oxygen. In such cells, the electrolyte combines the oxygen and hydrogen to form water and to release electrons.

Fuel cells often are arranged as a multi-cell assembly or "stack." In a multi-cell stack, multiple cells are connected together in series. The number of single cells within a multi-cell assembly are adjusted to increase the overall power output of the fuel cell. Typically, the cells are connected in series with one side of a fluid flow plate acting as the anode for one cell and the other side of the fluid flow plate acting as the cathode for an adjacent cell. Power is supplied by connecting a circuit to end plates arranged at each end of the repeating cells.

Electrical systems often use different voltages, such as one voltage for power transmission, another voltage for signals and yet another voltage for actuators. Typical known electrical supply systems, such as fuel cells, supply electricity at a single voltage. Additional power supplies are used to change the cell voltage to other voltage levels required by the system.

US 2007/111061 A1 relates to fuel cells and a voltage supply method. JP 2011216351A relates to a fuel cell and a fuel cell system capable of improving the voltage conversion efficiency of the voltage converter. JP 5133466 B2 relates to a separator for a fuel cell. DE 10314360 A1 relates to a power supply for a vehicle in which at least two voltage circuits with different voltage levels are connected to supply a voltage on-board network and/or for an electric vehicle drive. Chien-Hsing Lee ET AL: "Assessment of PEM Fuel Cells-Based DC/DC Power Conversion for Applications in AUVs", IEEE TRANSACTIONS ON AEROSPACE AND ELECTRONIC SYSTEMS, vol. 46, no. 4, 30 December 2010, pages 1834-1847, relates to the behaviour of the electrical output for a fuel cell stack based DC-DC power conversion for autonomous underwater vehicles. US 2010/0055517 A1 relates to power systems useful in non-air breathing engines such as submersible vehicles.

### SUMMARY

The subject-matter of the present invention is defined by the independent claims. Preferred embodiments are described by the dependent claims.

A fuel cell stack has a first end plate, a second end plate, and an internal current collecting plate. A first load is connected to the first end plate and the second end plate. A second load is connected to the first end plate and the internal current collecting plate.

The various features and advantages of this invention will become apparent to those skilled in the art from the following detailed description of an embodiment. The drawings that accompany the detailed description can be briefly described as follows.

### BRIEF DESCRIPTION OF THE DRAWINGS

Figure 1 shows a schematic view of an example fuel cell stack according to a first embodiment.
Figure 2 shows a schematic view of an example fuel cell stack according to a second embodiment.

### DETAILED DESCRIPTION

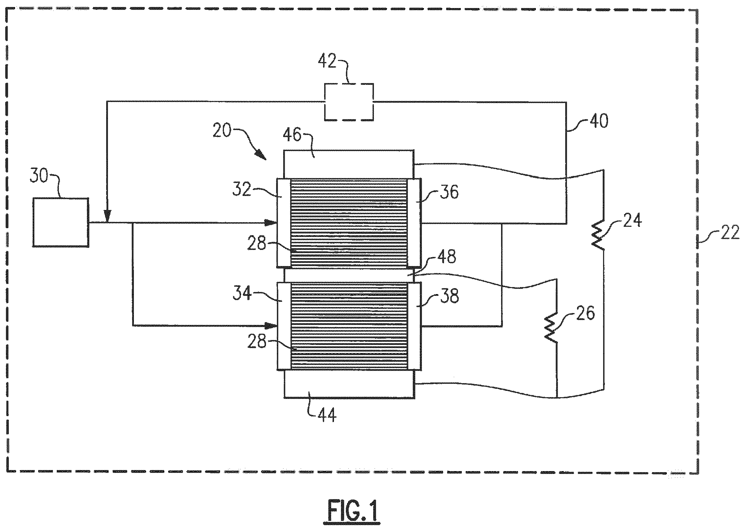

Figure 1 illustrates a fuel cell stack 20 shown schematically mounted within an exemplary vehicle 22. The vehicle 22 is an Unmanned Underwater Vehicle (UUV).

The fuel cell stack 20 is configured to provide power to loads 24, 26 within the vehicle 22. Loads 24, 26 may include one or more propulsion systems and/or electrical components, such as controllers and sensors.

The fuel cell stack 20 includes a plurality of fuel cells 28 for generating power by converting chemical energy into electrical energy. Each of fuel cells 28 comprises an anode, a cathode, and an electrolyte. In some examples, each of the fuel cells 28 comprises a proton exchange membrane (PEM). Other conventional fuel cell arrangements are contemplated, including metal hydride fuel cells, solid oxide fuel cells (SOFC), alkali fuel cells, molten carbonate fuel cells (MCFC) and phosphoric acid fuel cells (PAFC).

Additionally, the fuel cells 28 can include the same active area or different active areas to generate different amounts of power.

In an embodiment, each fuel cell 28 provides 0.6-0.9 V. Multiple fuel cells 28 are electrically connected in series to produce a stack voltage to meet the needs of the particular system.

The fuel cell stack 20 receives fuel or reactant such as hydrogen (H₂) from a fuel source 30, such as a tank. The fuel flows into fuel passages 32, 34 and through the fuel cells 28, where the fuel interacts with the anode of each fuel cell 28 and is consumed converting chemical energy into electrical energy. Similarly, an oxygen containing gas (not shown) passes along the cathode of each fuel cell 28. Excess fuel that is not consumed in the fuel cells 28 exits the fuel cells 28 through passages 36, 38. In an embodiment, this fuel is recycled back to fuel source 30 to be reused in the fuel cell stack 20 in an anode recycle loop 40. In a further embodiment, a pump 42 facilitates the flow of fuel from passages 36, 38 back to the fuel passages 32 and 34. The pump 42 may be a blower or an ejector, for example.

The anode recycle loop 40 helps to ensure that there is always flow across the anode of each fuel cell 28. For example, the fuel cell 28 may be designed to consume only 80%-95% of the fuel to prevent localized starvation, which may damage the fuel cell 28. The excess fuel from passages 36, 38 is reused in the fuel cell stack 20. In an embodiment, loads 24, 26 may cause a fuel imbalance across the anodes of fuel cells 28, so excess fuel from passages 36, 38 is combined before being recycled back to fuel source 30, to provide a more uniform fuel concentration across the fuel cells 28.

The fuel cell stack 20 has a first end plate 44 and a second end plate 46 at either end of the plurality of fuel cells 28, and an intermediate-stack or internal current collecting plate 48 inserted among the fuel cells 28. The first load 24 is connected between the first end plate 44 and second end plate 46 such that the entire stack voltage is applied across load 24. The second load 26 is connected between the first end plate 44 and the internal current collecting plate 48 such that a portion of the stack voltage is applied across the second load 26. This arrangement allows for the fuel cell stack 20 to provide two different voltage levels to two different loads 24, 26 simultaneously.

The internal current collecting plate 48 may be aluminum gold-plated or stainless steel gold-plated, for example. However, other plate materials are contemplated. The internal current collecting plate 48 may be the same material as the first and second end plates 44, 46, or may be a different material.

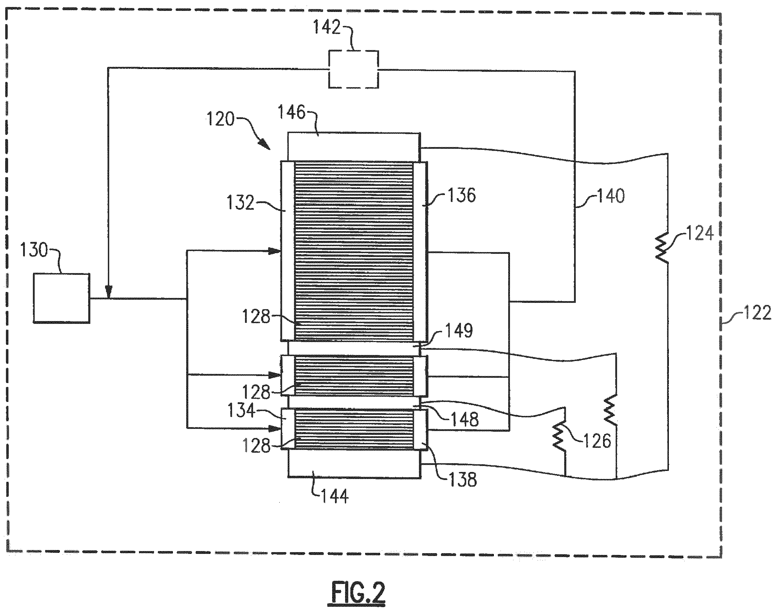

Figure 2 shows a schematic view of a second embodiment of a fuel cell stack 120. In this disclosure, like reference numerals designate like elements where appropriate and reference numerals with the addition of one-hundred or multiples thereof designate modified elements that are understood to incorporate the same features and benefits of the corresponding original elements.

In further embodiments, additional internal current collecting plates 149 are inserted among the fuel cells 128. There could be as many internal plates 148, 149 as one less than the number of fuel cells 128. In the illustrated example, there are two internal current collecting plates 148, 149, such that the fuel cell stack 120 provides three different voltage levels simultaneously. In this embodiment, each load is connected to the first end plate 144 and either the second end plate 146 for the full stack voltage, or the internal current collecting plate 148, 149 that is positioned at the desired voltage. For example, the fuel cell stack 120 may provide 60 V to a first load 124, such as power transmission, 24 V to a second load 124, such as controllers or actuators, and 12 V to a third load 126, such as sensors.

The use of multiple internal current collecting plates 148, 149 eliminates the need for power conversion devices to raise or lower voltage to the desired level for systems requiring different voltages. This elimination of power conversion devices saves on additional hardware weight and volume as well as improving overall system efficiency by eliminating power conversion losses. Higher efficiency and lower weight allow for longer mission durations between refueling.

Although the different examples have a specific component shown in the illustrations, embodiments of this disclosure are not limited to those particular combinations. It is possible to use some of the components or features from one of the examples in combination with features or components from another one of the examples.

Furthermore, the foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A system comprising:
an unmanned underwater vehicle;
a first load;
a second load; and
a fuel cell stack (20) mounted in the unmanned underwater vehicle, the fuel stack comprising:
a first end plate (44);
a second end plate (46); and
an internal current collecting plate (48) arranged in the fuel cell stack (20) between the first end plate (44) and the second end plate (46), wherein the first load (24) is connected to the first end plate (44) and the second end plate (46), and the second load (26) is connected to the first end plate (44) and the internal current collecting plate (48);
wherein the first load (24) and the second load (26) are components of the unmanned underwater vehicle.

2. The system of claim 1, wherein the first load (24) and the second load (26) are supplied two different voltages simultaneously.

3. The system of claim 2, wherein the first load (24) operates at a high voltage, and the second load operates at a lower voltage.

4. The system of any preceding claim, wherein the fuel cell stack (20) comprises hydrogen fuel cells.

5. The system of claim 4, wherein the hydrogen fuel cells comprise proton exchange membrane cells.

6. The system of any preceding claim, comprising an anode recycle loop (40) configured to direct a flow of fuel exiting the fuel cell stack (20) to a fuel source for reuse in the fuel cell stack.

7. The system of any preceding claim, wherein the internal current collecting plate (48) is stainless steel gold-plated.

8. A method of powering multiple loads of an Unmanned Underwater Vehicle, comprising:
providing a fuel cell stack (20) having a first end plate (44), a second endplate (46), and an internal current collecting plate (48) arranged between the first end plate and the second endplate;
connecting a first load (24) to the first end plate (44) and the second endplate (46); and
connecting a second load (26) to the first end plate (44) and the internal current collecting plate (48).

9. The method of claim 8, wherein the first load (24) and the second load (26) operate at different voltages simultaneously

10. The method of claim 9, wherein the first load (24) operates at a high voltage and the second load (26) operates at a lower voltage.

11. The method of claims 8-10, wherein the fuel cell stack (20) comprises hydrogen fuel cells.

12. The method of claims 8-11, wherein the fuel cell stack (20) comprises an anode recycle loop (40) configured to direct a flow of fuel exiting the fuel cell stack (20) to a fuel source for reuse in the fuel cell stack.

13. The method of claim 11, wherein the hydrogen fuel cells comprise proton exchange membrane cells.

## Patentansprüche

1. System, umfassend:
ein unbemanntes Unterwasserfahrzeug;
eine erste Last;
eine zweite Last; und
ein Brennstoffzellenstack (20), das in dem unbemannten Unterwasserfahrzeug eingebaut ist, wobei das Brennstoffzellenstack Folgendes umfasst:
eine erste Endplatte (44);
eine zweite Endplatte (46); und
eine innere Stromabnahmeplatte (48), die in dem Brennstoffzellenstack (20) zwischen der ersten Endplatte (44) und der zweiten Endplatte (46) angeordnet ist, wobei die erste Last (24) mit der ersten Endplatte (44) und der zweiten Endplatte (46) verbunden ist, und die zweite Last (26) mit der ersten Endplatte (44) und der inneren Stromabnahmeplatte (48) verbunden ist;
wobei die erste Last (24) und die zweite Last (26) Komponenten des unbemannten Unterwasserfahrzeugs sind.

2. System nach Anspruch 1, wobei der ersten Last (24) und der zweiten Last (26) gleichzeitig zwei verschiedene Spannungen bereitgestellt werden.

3. System nach Anspruch 2, wobei die erste Last (24) bei einer höheren Spannung arbeitet und die zweite Last bei einer niedrigeren Spannung arbeitet.

4. System nach einem der vorstehenden Ansprüche, wobei das Brennstoffzellenstack (20) Wasserstoffbrennstoffzellen umfasst.

5. System nach Anspruch 4, wobei die Wasserstoffbrennstoffzellen Protonenaustauschmembranzellen umfassen.

6. System nach einem der vorstehenden Ansprüche, umfassend eine Anodenrückführschleife (40), die konfiguriert ist, um einen Strom von Brennstoff, der aus dem Brennstoffzellenstack (20) austritt, zu einer Brennstoffquelle zur Wiederverwendung in dem Brennstoffzellenstack zu führen.

7. System nach einem der vorstehenden Ansprüche, wobei die innere Stromabnahmeplatte (48) goldbeschichteter Edelstahl ist.

8. Verfahren zum Versorgen mehrerer Lasten eines unbemannten Unterwasserfahrzeugs mit Energie, umfassend:
Bereitstellen eines Brennstoffzellenstacks (20), das eine erste Endplatte (44), eine zweite Endplatte (46) und eine innere Stromabnahmeplatte (48), die zwischen der ersten Endplatte und der zweiten Endplatte angeordnet ist, aufweist;
Verbinden einer ersten Last (24) mit der ersten Endplatte (44) und der zweiten Endplatte (46); und
Verbinden einer zweiten Last (26) mit der ersten Endplatte (44) und der inneren Stromabnahmeplatte (48).

9. Verfahren nach Anspruch 8, wobei die erste Last (24) und die zweite Last (26) gleichzeitig bei verschiedenen Spannungen arbeiten.

10. Verfahren nach Anspruch 9, wobei die erste Last (24) bei einer höheren Spannung arbeitet und die zweite Last (26) bei einer niedrigeren Spannung arbeitet.

11. Verfahren nach den Ansprüchen 8-10, wobei das Brennstoffzellenstack (20) Wasserstoffbrennstoffzellen umfasst.

12. Verfahren nach den Ansprüchen 8-11, wobei das Brennstoffzellenstack (20) eine Anodenrückführschleife (40) umfasst, die konfiguriert ist, um einen Strom von Brennstoff, der aus dem Brennstoffzellenstack (20) austritt, zu einer Brennstoffquelle zur Wiederverwendung in dem Brennstoffzellenstack zu führen.

13. Verfahren nach Anspruch 11, wobei die Wasserstoffbrennstoffzellen Protonenaustauschmembranzellen umfassen.

## Revendications

1. Système comprenant :
un véhicule sous-marin sans équipage ;
une première charge ;
une seconde charge ; et
un empilement de piles à combustible (20) monté dans le véhicule sous-marin sans équipage, l'empilement de piles à combustible comprenant :
une première plaque d'extrémité (44) ;
une seconde plaque d'extrémité (46) ; et
une plaque collectrice de courant interne (48) agencée dans l'empilement de piles à combustible (20) entre la première plaque d'extrémité (44) et la seconde plaque d'extrémité (46), dans lequel la première charge (24) est reliée à la première plaque d'extrémité (44) et à la seconde plaque d'extrémité (46), et la seconde charge (26) est reliée à la première plaque d'extrémité (44) et à la plaque collectrice de courant interne (48) ;
dans lequel la première charge (24) et la seconde charge (26) sont des composants du véhicule sous-marin sans équipage.

2. Système selon la revendication 1, dans lequel la première charge (24) et la seconde charge (26) sont alimentées simultanément par deux tensions différentes.

3. Système selon la revendication 2, dans lequel la première charge (24) fonctionne à haute tension et la seconde charge fonctionne à une tension inférieure.

4. Système selon une quelconque revendication précédente, dans lequel l'empilement de piles à combustible (20) comprend des piles à combustible à hydrogène.

5. Système selon la revendication 4, dans lequel les piles à combustible à hydrogène comprennent des piles à membrane échangeuse de protons.

6. Système selon une quelconque revendication précédente, comprenant une boucle de recyclage d'anode (40) configurée pour diriger un écoulement de combustible sortant de l'empilement de piles à combustible (20) vers une source de combustible en vue d'une réutilisation dans l'empilement de piles à combustible.

7. Système selon une quelconque revendication précédente, dans lequel la plaque collectrice de courant interne (48) est en acier inoxydable plaqué or.

8. Procédé d'alimentation de plusieurs charges d'un véhicule sous-marin sans équipage, comprenant :
la fourniture d'un empilement de piles à combustible (20) comportant une première plaque d'extrémité (44), une seconde plaque d'extrémité (46) et une plaque collectrice de courant interne (48) agencée entre la première plaque d'extrémité et la seconde plaque d'extrémité ;
le raccord d'une première charge (24) à la première plaque d'extrémité (44) et à la seconde plaque d'extrémité (46) ; et
le raccord d'une seconde charge (26) à la première plaque d'extrémité (44) et à la plaque collectrice de courant interne (48) .

9. Procédé selon la revendication 8, dans lequel la première charge (24) et la seconde charge (26) fonctionnent simultanément à des tensions différentes.

10. Procédé selon la revendication 9, dans lequel la première charge (24) fonctionne à haute tension et la seconde charge (26) fonctionne à une tension inférieure.

11. Procédé selon les revendications 8 à 10, dans lequel l'empilement de piles à combustible (20) comprend des piles à combustible à hydrogène.

12. Procédé selon les revendications 8 à 11, dans lequel l'empilement de piles à combustible (20) comprend une boucle de recyclage d'anode (40) configurée pour diriger un écoulement de combustible sortant de l'empilement de piles à combustible (20) vers une source de combustible en vue d'une réutilisation dans l'empilement de piles à combustible.

13. Procédé selon la revendication 11, dans lequel les piles à combustible à hydrogène comprennent des piles à membrane échangeuse de protons.
